# EUROPÄISCHE PATENTSCHRIFT

(11) **EP 0 618 129 B1**
(45) Veröffentlichungstag und Bekanntmachung des Hinweises auf die Patenterteilung: **18.09.1996**
(21) Anmeldenummer: 94104278.0
(22) Anmeldetag: 18.03.1994
(51) Int. Cl.: B62D 31/00, B60J 5/10

(54) **Kraftfahrzeug, insbesondere Personenkraftwagen**
Motor vehicle, particularly passenger car
Véhicule à moteur, notamment voiture particulière

(30) Priorität: 31.03.1993 DE 4310494
(43) Veröffentlichungstag der Anmeldung: 05.10.1994
(73) Patentinhaber: ADAM OPEL AG, 65423 Rüsselsheim (DE)
(72) Erfinder: Brandel, Klaus, D-55578 Wallertheim (DE)
(74) Vertreter: Bergerin, Ralf, Dipl.-Ing.

(56) Entgegenhaltungen:
- EP-B- 0 200 649
- DE-A- 3 843 674
- DE-U- 1 742 672
- FR-A- 2 447 311

## Beschreibung

Die Erfindung bezieht sich auf ein Kraftfahrzeug, insbesondere einen Personenkraftwagen, mit stufenlosem Schrägheck, mit einer Fahrgastkabine, die eine an ihrem oberen Ende um eine Horizontalachse schwenkbare Heckklappe aufweist, welche aus Heckklappenrahmen und -scheibe besteht, wobei sich die Heckklappenscheibe um eine an ihrer Oberkante liegende Horizontalachse unabhängig von der jeweiligen Schwenkstellung der Heckklappe bzw. des Heckklappenrahmens verschwenken läßt.

Derartige rückwärtige Karosserieabschlüsse sind bei Personenkraftwagen gang und gäbe. Die betreffenden Fahrzeuge sind z. B. als "Schräghecklimousinen" allgemein bekannt.

Ein PKW, bei dem Heckklappenscheibe und Heckklappenrahmen unabhängig voneinander verschwenkt werden können, ist durch die DE 38 43 674 A1 bekannt geworden. Bei dem bekannten Fahrzeug geht es im wesentlichen darum, die Heckklappe und damit die Kofferraumabdeckung öffnen zu können, ohne daß dabei zugleich auch die Heckklappenscheibe geöffnet werden muß. Umgekehrt soll sich aber die Heckklappenscheibe auch dann öffnen lassen, wenn die Heckklappe geschlossen ist (Lüftung, Temperaturausgleich).

Eine ähnliche Lösung wie DE 38 43 674 A1 bei im wesentlichen gleicher Aufgabenstellung zeigt auch die EP 0 200 649 B2.

Allerdings handelt es sich - abweichend vom eingangs bezeichneten Gattungsbegriff der vorliegenden Anmeldung - beim Gegenstand der DE 38 43 674 A1 wie auch bei dem aus EP 0 200 649 B2 bekannten Kraftfahrzeug nicht eigentlich um ein Schrägheckfahrzeug, sondern eher um eine Stufenhecklimousine, wobei Kofferraumdeckel und Heckfenster in einer gemeinsamen, verschwenkbaren Heckklappe integriert sind.

Ausgehend von dem genannten Stand der Technik ist es die Aufgabe der Erfindung, die Nutzungsmöglichkeiten für ("reine") Schrägheckfahrzeuge zu erweitern.

Gemäß der Erfindung wird die Aufgabe bei einem Kraftfahrzeug der eingangs bezeichneten Gattung in überraschend einfacher Weise dadurch gelöst, daß die Heckklappenscheibe aus ihrer Schließstellung - vorzugsweise bei zugleich in Schließstellung befindlichem Heckklappenrahmen - in eine den Fahrgastraum nach hinten abschließende Position in die Fahrgastkabine hinein verschwenkbar ist.

Hierbei kann die Schwenkachse der Heckklappenscheibe in an sich bekannter Weise mit der Schwenkachse des Heckklappenrahmens zusammenfallen, zumindest in der Nähe der letzteren liegen. Vorzugsweise ist die Schwenkachse der Heckklappenscheibe unterhalb der Schwenkachse des Heckklappenrahmens an diesem angeordnet.

Die wesentlichen Vorteile der Erfindung sind darin zu sehen, daß die (vom Heckklappenrahmen unabhängige) Verschwenkbarkeit der Heckklappenscheibe in das Innere der Fahrgastkabine hinein zum einen den Fahrgastraum größenmäßig beeinflußt und zum anderen (und dies ist besonders wesentlich) eine offene Ladepritsche ermöglicht.

Als besonders zweckmäßig im Sinne der Erfindung erweist es sich, wenn die Heckklappenscheibe in eine vertikale oder im wesentlichen vertikale Stellung in das Innere der Fahrgastkabine verschwenkbar und in dieser Stellung fixierbar ist. Weitere vorteilhafte Ausgestaltungen dieses Gedankens enthalten die Ansprüche 4 bis 7.

Die Vorteile der Erfindung äußern sich also darin, daß der rückwärtige Fahrzeugbereich hinter der in das Fahrzeuginnere hineinverschwenkten Heckklappenscheibe zur vielfältigen Verwendung nutzbar wird. So wird nach einer möglichen Ausführungsform der Erfindung vorgeschlagen, daß der sich im Bereich der Heckklappe hinter der ins Innere der Fahrgastkabine verschwenkten Heckklappenscheibe ergebende freie Raum als - nach hinten/oben offener - Laderaum (Ladepritsche) dient. Vorteilhafte Weiterbildungen hierzu enthalten die Ansprüche 9 und 12.

Der so entstandene Laderaum ist besonders zum Transport sperriger Güter, wie Fahrräder und dergleichen, geeignet.

Nach einer anderen sehr vorteilhaften Alternativlösung wird vorgeschlagen, daß der sich im Bereich der Heckklappe hinter der ins Innere der Fahrgastkabine verschwenkten Heckklappenscheibe ergebende freie Raum eine Auflagefläche für einen aufzusattelnden Container oder Anhänger bildet.

Die Lösung ermöglicht den Transport größerer Mengen von Gütern der verschiedensten Art. Zur einfachen und sicheren praktischen Realisierung der diesbezüglichen Transportprobleme ist es zweckmäßig, wenn an der Unterkante des Heckklappenrahmens eine winkelförmige, vorzugsweise im Querschnitt rechtwinklige, Haltevorrichtung um eine Horizontalachse schwenkbar angeordnet ist.

Eine weitere sehr nützliche Anwendungsmöglichkeit der Erfindung ergibt sich bei Fahrzeugen mit abnehmbarem (auswechselbarem) Antrieb (sogenannter Antriebsmodul), und zwar dergestalt, daß an die Fahrgastkabine - bei nach oben verschwenkter Heckklappe oder Heckklappenrahmen und vorher entferntem Antrieb (Antriebsmodul) - ein den verfügbaren Fahrzeugraum vergrößerndes Heckteil, vorzugsweise Heckmodul mit integriertem Antrieb, ankoppelbar ist, derart, daß die Heckklappe bzw. der Heckklappenrahmen die Dachfläche oder einen Teil derselben des eine entsprechende Dachaussparung aufweisenden Heckteils bildet. Zweckmäßigerweise dient hierbei der Heckklappenrahmen als Verbindungselement zur Ankoppelung des Heckteils. Die in das Innere der Fahrgastkabine verschwenkte Heckklappenscheibe kann als Trennelement zur räumlichen Abgrenzung der Fahrersitzreihe von dem Rückraum des durch das angekoppelte Heckteil ergänzten Gesamtfahrzeugs fungieren.

Zur Veranschaulichung und näheren Erläuterung der Erfindung dienen Ausführungsbeispiele, die in der Zeichnung dargestellt und im folgenden ausführlich beschrieben sind. Es zeigt:
- Fig. 1: eine Ausführungsform eines zweisitzigen Schrägheckfahrzeugs, in Seitenansicht,
- Fig. 2-4: verschiedene Verwendungsmöglichkeiten des Fahrzeugs nach Fig. 1,
- Fig. 5: das Schrägheckfahrzeug nach Fig. 1 in perspektivischer Darstellung, schräg von hinten betrachtet,
- Fig. 6: die Heckpartie des Gegenstands von Fig. 5, in Draufsicht,
- Fig. 7: die Einzelheit "A" aus Fig. 6 in gegenüber Fig. 6 vergrößerter Darstellung,
- Fig. 8 und 9: eine gegenüber Fig. 1 und 5 etwas abgewandelte Variante eines Schrägheckfahrzeugs, in Darstellung entsprechend Fig. 1 bzw. Fig. 5,
- Fig. 10: das Fahrzeug nach Fig. 2 und dessen Verwendung, in perspektivischer Darstellung, schräg von hinten betrachtet,
- Fig. 11: den Heckbereich des Fahrzeugs nach Fig. 1, bei geschlossener Heckklappe und innerhalb des Heckklappenrahmens befindlicher (geschlossener) Heckklappenscheibe, in gegenüber Fig. 1 vergrößerter Darstellung,
- Fig. 12: den Gegenstand von Fig. 11, bei geschlossener Heckklappe und in den Fahrgastraum hinein verschwenkter Heckklappenscheibe,
- Fig. 13: das Fahrzeug nach Fig. 9 in entsprechender Darstellung, mit in Schließstellung befindlichem Heckklappenrahmen und in den Fahrgastraum hin verschwenkter Heckklappenscheibe, und
- Fig. 14 bis 16: Anwendungsmöglichkeiten der Erfindung bei einer Vergrößerung des Fahrzeugs bzw. des verfügbaren Fahrzeug-Innenraumes durch Anbau verschiedener Heckmodule.

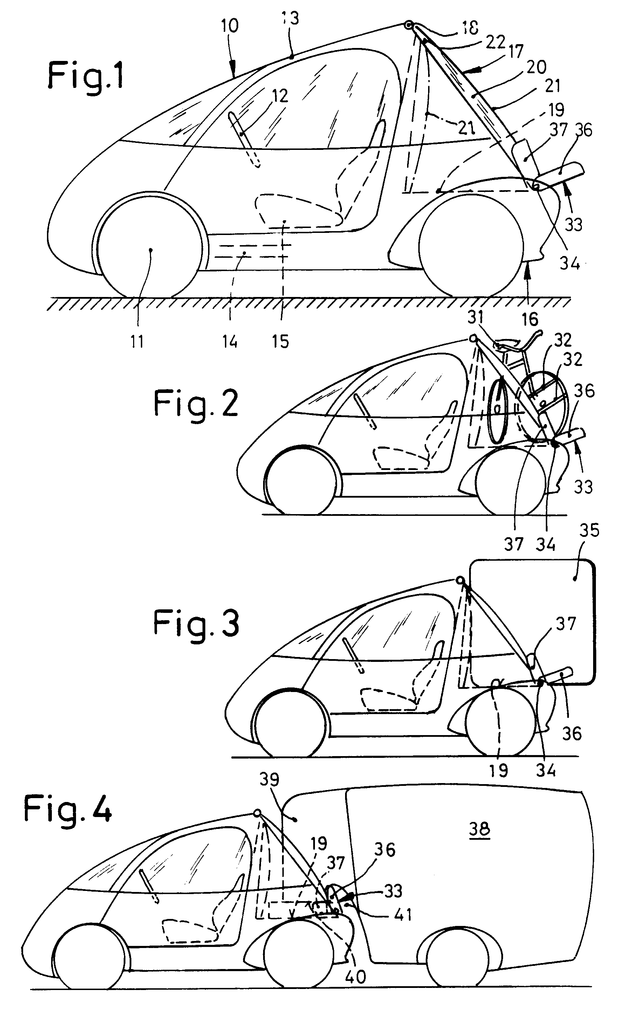

Das aus Fig. 1 bis 4, 8 und 11 ersichtliche Kleinfahrzeug besteht aus einem insgesamt mit 10 bezeichneten Frontmodul, der die Vorderachse 11 mit Lenkung 12 und die Fahrgastkabine 13 mit tragendem Rahmen 14, einer Sitzreihe 15 (z. B. zwei Einzelsitze) umfaßt, und aus einem insgesamt mit 16 bezifferten auswechselbaren Antriebsmodul. Antriebsmodul 16 und dessen Ankoppelung am Frontmodul 10 sind nicht maßgebend für die vorliegende Erfindung, so daß sich nähere Einzelheiten hierüber erübrigen. Auch könnte es sich ebensogut um ein herkömmliches Fahrzeug mit fest installiertem Antrieb (Heck-, Front- oder Mittelantrieb) handeln. Die Erfindung beschränkt sich ferner keineswegs nur auf zweisitzige Fahrzeuge; sie ist vielmehr gleichermaßen z. B. auch auf viersitzige Limousinen anwendbar.

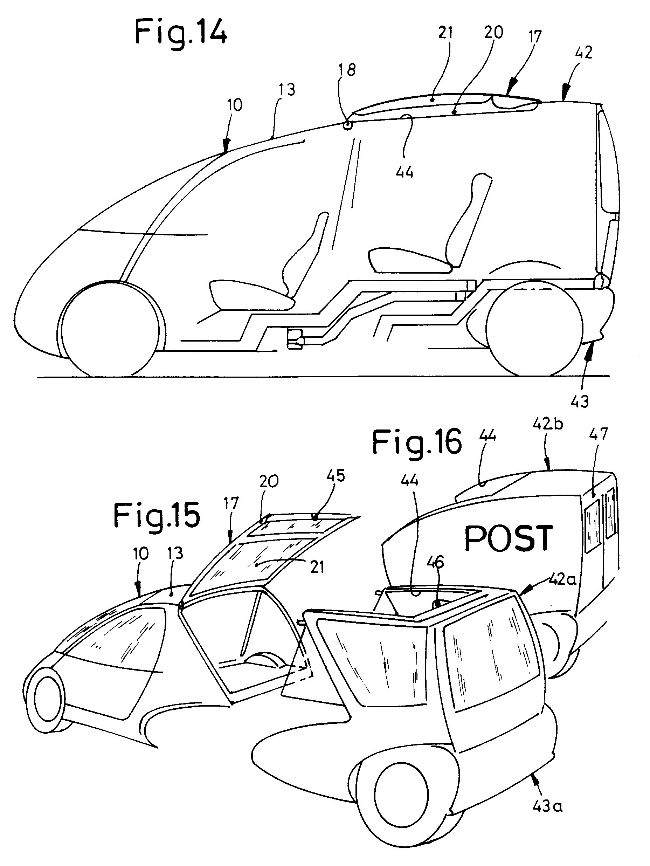

Worauf es dagegen bei der vorliegenden Erfindung ankommt, ist der rückwärtige Abschluß des Fahrzeugs 10. Dieser ist durch eine im wesentlichen ebenflächig (also nicht abgestuft) ausgebildete, insgesamt mit 17 bezeichnete Heckklappe realisiert, die um eine an ihrer Oberkante liegende Horizontalachse 18 schwenkbar an der Fahrzeugkarosserie 13 angelenkt ist. Die Schwenkachse 18 kann - wie insbesondere aus Fig. 13 hervorgeht - durch Scharniere üblicher Bauart realisiert sein. In ihrer Schließstellung verläuft die Heckklappe 17 schräg von vorn/oben nach hinten/unten bis zu einer hinter der Sitzreihe 15 befindlichen Gepäckablagefläche 19. Die Heckklappe 17 besteht - neben dem üblichen Schließ- und Verriegelungsmechanismus (nicht gezeigt) - aus einem Heckklappenrahmen 20 und einem - wie aus der Zeichnung insgesamt erkennbar ist - den Heckklappenrahmen 20 sehr großflächig ausfüllenden Heckklappenscheibe 21.

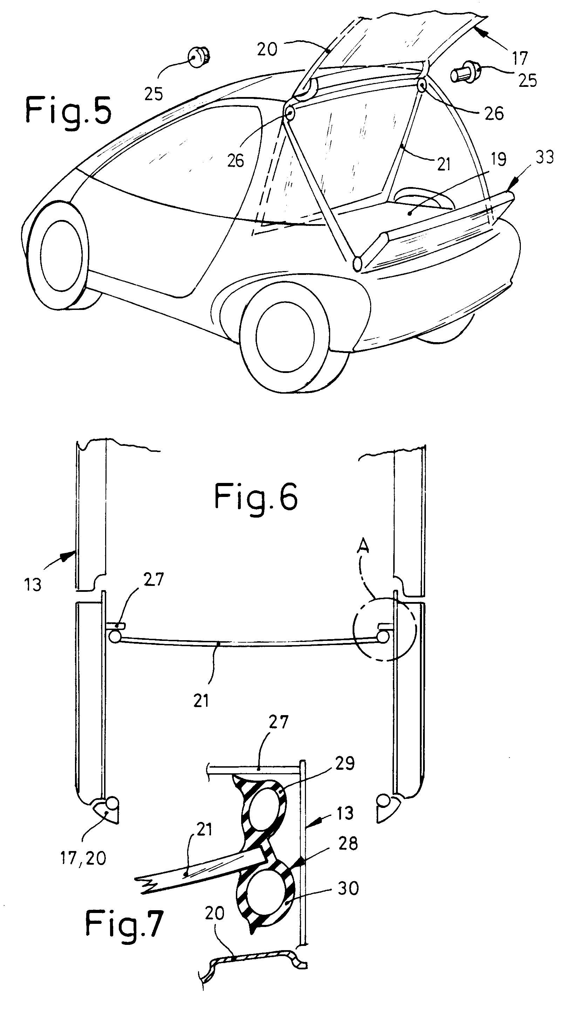

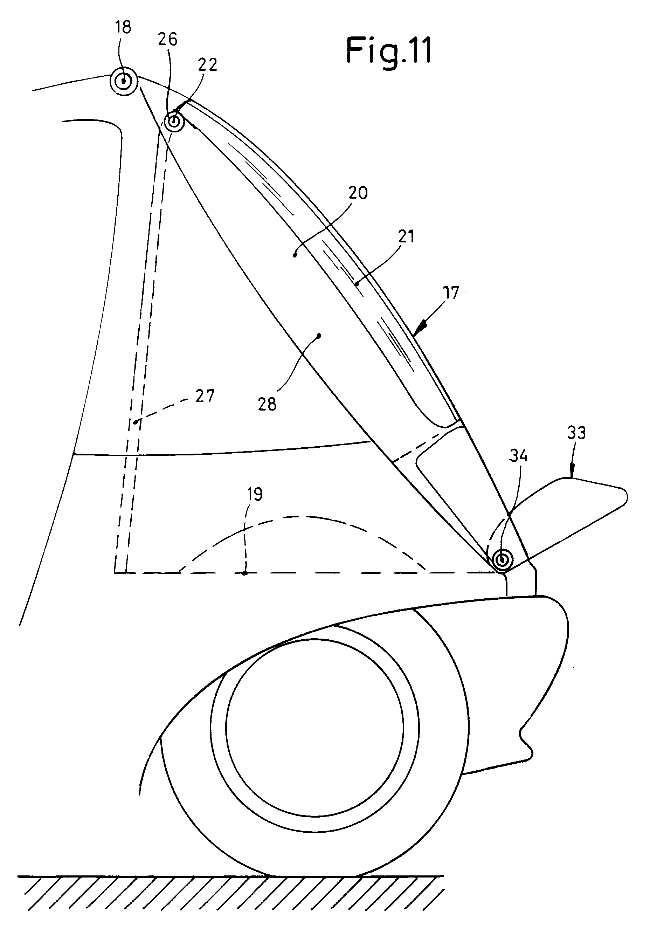

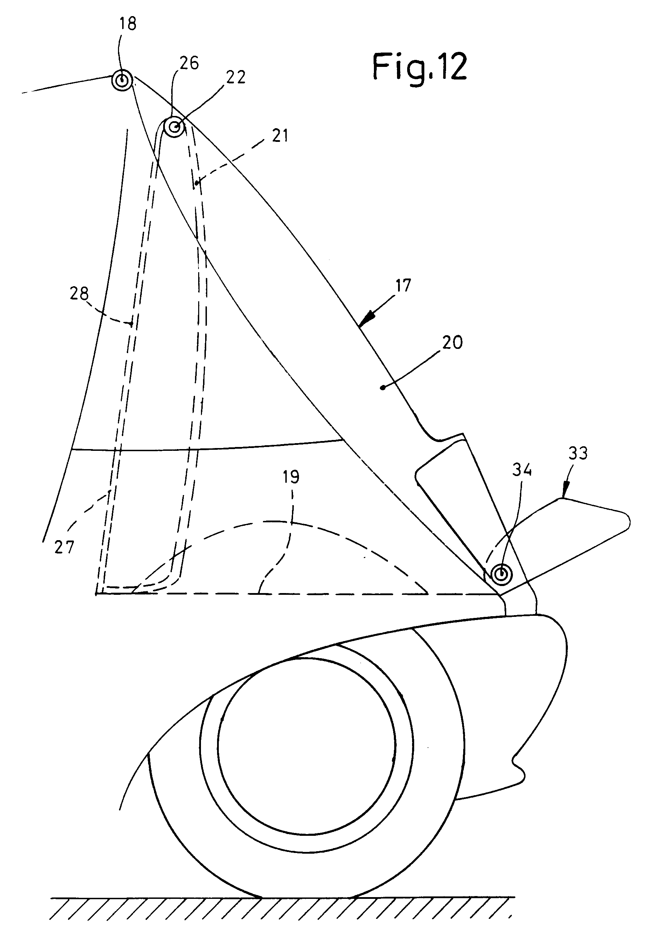

Die Besonderheit besteht darin, daß die Heckklappenscheibe 21 um eine an ihrer Oberkante liegende Horizontalachse 22 gegenüber dem in Schließstellung befindlichen Heckklappenrahmen 20 in den Fahrgastraum hinein verschwenkbar ist (Fig. 1 bis 4, 10, 12 und 13). Die Schwenkachse 22 liegt hierbei - wie insbesondere auch aus Fig. 11 und 12 erkennbar ist - nah an der Schwenkachse 18 des Heckklappenrahmens 20, die zugleich die Schwenkachse der Heckklappe 17 insgesamt darstellt. Fig. 11 bis 13 machen deutlich, daß die Schwenkachse 22 der Heckklappenscheibe 21 in den Heckklappenrahmen 20 integriert ist. Hierzu besitzt der Heckklappenrahmen 20 Gelenkaugen 23 mit Bohrungen 24, in die Gelenkbolzen 25 eingreifen (siehe Fig. 13). Die Heckklappenscheibe 21 weist Gelenkbohrungen 26 auf (siehe insbesondere auch Fig. 5), die von den Gelenkbolzen 25 durchsetzt werden.

In den Darstellungen der Fig. 1 bis 4, 10, 12 und 13 nimmt die Heckklappenscheibe 21 ihre - im wesentlichen vertikale - Endstellung im Innern der Fahrgastzelle 13 ein. Es versteht sich, daß hierbei aufgrund der im vorstehenden geschilderten konstruktiven Gegebenheiten der Heckklappenrahmen 20 in Schließstellung positioniert sein muß. Wenn der Heckklappenrahmen 20 trotz ins Fahrzeuginnere verschwenkter Heckklappenscheibe 21 in Öffnungsstellung gebracht werden soll, wie etwa Fig. 5 zeigt, so muß vorher die Gelenkverbindung 23 bis 26 zwischen Heckklappenrahmen 20 und Heckklappenscheibe 21 gelöst werden, was durch Entfernen der Gelenkbolzen 25 erfolgen kann. Für die Halterung der Heckklappenscheibe 21 innerhalb des Fahrgastraumes müssen dann entsprechende zusätzliche Fixiermittel vorgesehen werden.

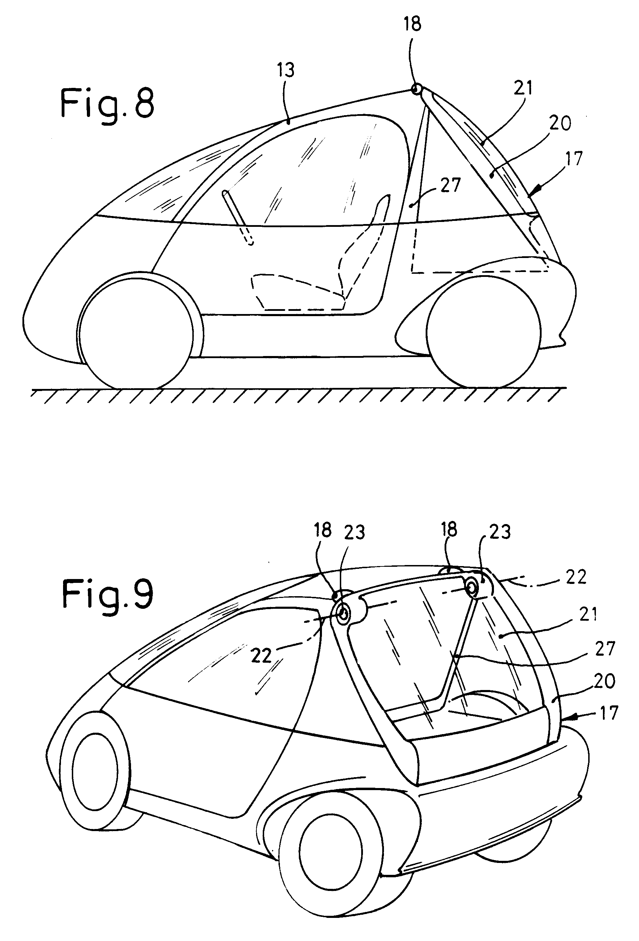

Im Innern der Fahrgastzelle 13 ist ein Rahmen 27 angeordnet, an dem die Heckklappenscheibe 21 in ihrer aus Fig. 1 bis 4, 6, 10, 12 und 13 ersichtlichen Endstellung dichtend zur Anlage kommt. Wie aus Fig. 7 hervorgeht, ist hierzu auf die Kanten der Heckklappenscheibe 21 eine umlaufende doppelte Dichtlippe 28 aufgesteckt. Befindet sich die Heckklappenscheibe 21 in ihrer ins Fahrzeuginnere verschwenkten Endstellung (Fig. 1 bis 4, 6, 10, 12 und 13), so kommt ein innerer Teil 29 der Dichtlippe 28 mit dem Rahmen 27 zur Anlage. Nimmt dagegen die Heckklappenscheibe 21 ihre Schließstellung innerhalb des Heckklappenrahmens 20 ein (Fig. 8, 9 und 11), so legt sich ein äußerer Teil 30 der Dichtlippe 28 entsprechend an dem Heckklappenrahmen 20 dichtend an (Fig. 7). (Alternativ ist es auch denkbar, den Rahmen 27 mit einem umlaufenden Dichtflansch zu versehen. In diesem Fall würde die Heckklappenscheibe 21 nur eine einfache Dichtlippe - zur Abdichtung gegenüber dem Heckklappenrahmen 20 - benötigen.)

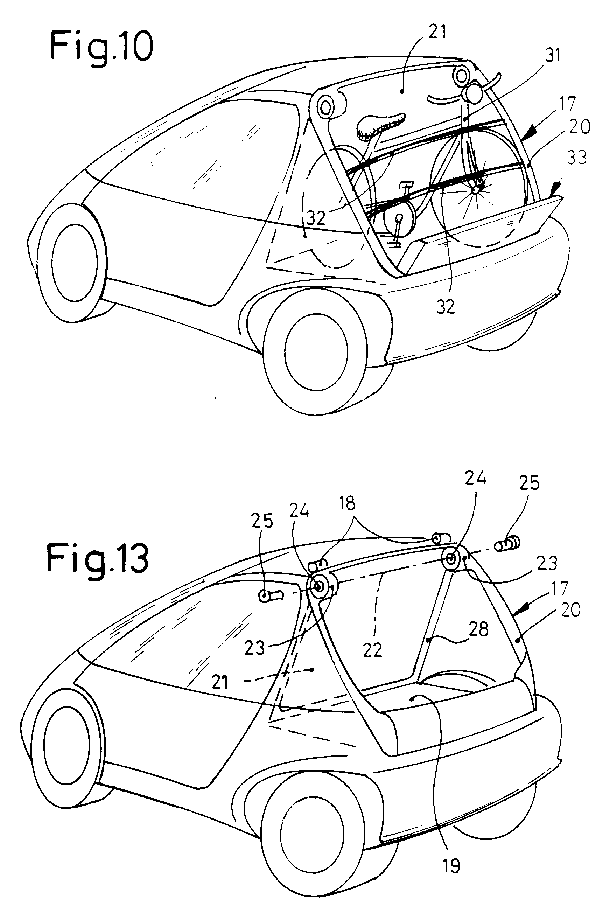

Durch die ins Fahrzeuginnere verschwenkte und dort am Rahmen 27 fixierte Heckklappenscheibe 21 wird die Gepäckablagefläche 19 zur offenen Ladepritsche. Fig. 2 bis 4 zeigen verschiedene Nutzungsmöglichkeiten für die Ladepritsche 19. So läßt sich damit - gemäß Fig. 2 - z. B. ein Fahrrad 31 (wie auch entsprechend andersartige sperrige Güter) transportieren (siehe hierzu auch Fig. 10). Das betreffende sperrige Gut 31 kann mit elastischen Haitebändern 32 zusätzlich fixiert werden, die beidseitig in den Heckklappenrahmen 20 eingehakt sein können.

Als weitere Hilfsvorrichtung zur Absicherung des geladenen Guts kann an der Unterkante des Heckklappenrahmens 20 eine winkelförmige, vorzugsweise in Querschnitt rechtwinklige Haltevorrichtung 33 um eine Horizontalachse 34 schwenkbar angeordnet sein.

Bei der Ausführungsform nach Fig. 3 dient die Ladepritsche 19 zur Aufnahme eines (kleineren) Containers 35. Dieser besitzt an seiner Unterseite Aussparungen, in die die winkelförmige Haltevorrichtung 33 mit ihren beiden Schenkeln 36 und 37 eingreift. Der Container 35 ist so gegen Wegrutschen nach hinten gesichert.

Fig. 4 zeigt eine Variante, bei der die Ladepritsche 19 als Aufnahmefläche zur Aufsattelung eines Anhängers 38 fungiert. Das Gesamtfahrzeug stellt also in diesem Fall eine Art Mini-Sattelschlepper dar. Der Anhänger 38 besitzt zu diesem Zweck einen schmalen, durch den Heckklappenrahmen 20 passenden Vorderteil 39 mit einer Gegenanlagefläche 40, die auf der Ladepritsche 19 aufliegt. Hierbei wird zugleich der Schenkel 37 der Haltevorrichtung 33 nach unten und der Schenkel 36 entsprechend nach oben verschwenkt. Die Haltevorrichtung 33 greift dabei mit ihrem Schenkel 36 in einen Hinterschnitt 41 des Anhängers 38 ein, und dieser ist somit in seiner Ankoppelungsposition gesichert.

Fig. 9 und 13 zeigen eine Besonderheit, die darin besteht, daß der Heckklappenrahmen 20 schalenartig ausgeformt ist, derart, daß er bei ins Fahrzeuginnere verschwenkter Heckklappenscheibe 21 als Halterahmen für geladene (sperrige) Güter dient.

Fig. 14 zeigt eine Ausführungsform, die sich dadurch auszeichnet, daß an die Fahrgastkabine 13 des Frontmoduls 10 - bei nach oben verschwenkter Heckklappe 17 oder Heckklappenrahmen 20 und vorher entferntem Antrieb (Antriebsmodul 16, Fig. 1) - ein den verfügbaren Fahrzeugraum vergrößerndes Heckteil, vorzugsweise Heckmodul 42 mit integriertem Antrieb 43, ankoppelbar ist, derart, daß die Heckklappe 17 bzw. der Heckklappenrahmen 20 die Dachfläche oder einen Teil derselben des eine entsprechende Dachaussparung 44 aufweisenden Heckteils 42 bildet.

Fig. 15 zeigt eine Variante, die derjenigen nach Fig. 14 ähnelt. Der (bei allen gezeigten Ausführungsformen gleichartige) Frontmodul 10 weist die schon geschilderten Merkmale auf und ist mit entsprechenden Bezugszeichen versehen. Auch der Heckmodul entspricht im großen und ganzen der Ausführungsform nach Fig. 14 und ist daher in Fig. 15 mit 42a bezeichnet. Er kann mit dem Antrieb 43a eine gemeinsame Baueinheit bilden.

Fig. 15 läßt besonders gut die Verwendung der Heckklappe 17 als Dach für den Heckmodul 42a erkennen. Die hochgeschwenkte Heckklappe 17 wird nach vorherigem Zusammenbau von Frontmodul 10 und Heckmodul 42a abgesenkt und verschließt die Dachaussparung 44 des Heckmoduls 42a. Hierzu besitzt die Heckklappe 17 einen Schließzapfen 45, der - nach entsprechender Absenkung der Heckklappe 17 - in eine korrespondierende Aufnahme 46 an der Dachaussparung 44 einrastet.

Eine ähnliche Variante eines Heckmoduls zeigt Fig. 16. Dieser ist dort mit 42b beziffert. Er besitzt - im Unterschied zu der Ausführungsform nach Fig. 15 - eine zweigeteilte Hecktür 47. Seitenfenster wie bei Fig.15 sind nicht vorgesehen. Ein Verschluß der Dachaussparung 44 durch die Heckklappe eines entsprechenden Frontmoduls kann ebenso wie bei den Ausführungsformen nach Fig. 14 und 15 erfolgen.

Ein mit dem Heckmodul 42b nach Fig. 16 ausgerüstetes Gesamtfahrzeug läßt sich als Kleintransporter verwenden, z. B. für Zwecke der Postzustellung und dergleichen mehr.

## Patentansprüche

1. Kraftfahrzeug, insbesondere Personenkraftwagen, mit stufenlosem Schrägheck, mit einer Fahrgastkabine, die eine an ihrem oberen Ende um eine Horizontalachse schwenkbare Heckklappe aufweist, welche aus Heckklappenrahmen und -scheibe besteht, wobei sich die Heckklappenscheibe um eine an ihrer Oberkante liegende Horizontalachse unabhängig von der jeweiligen Schwenkstellung der Heckklappe bzw. des Heckklappenrahmens verschwenken läßt, dadurch gekennzeichnet, daß die Heckklappenscheibe (21) aus ihrer Schließstellung - vorzugsweise bei zugleich in Schließstellung befindlichem Heckklappenrahmen (20) - in eine den Fahrgastraum nach hinten abschließende Position in die Fahrgastkabine (13) hinein verschwenkbar ist.

2. Kraftfahrzeug nach Anspruch 1,
dadurch gekennzeichnet, daß die Schwenkachse (22) der Heckklappenscheibe (21) in an sich bekannter Weise mit der Schwenkachse (18) des Heckklappenrahmens (20) zusammenfällt, zumindest in der Nähe der Schwenkachse (22) des Heckklappenrahmens (20), unterhalb derselben, angeordnet ist.

3. Kraftfahrzeug nach Anspruch 1 oder 2,
dadurch gekennzeichnet, daß die Heckklappenscheibe (21) in eine vertikale oder im wesentlichen vertikale Stellung in das Innere der Fahrgastkabine (13) verschwenkbar und in dieser Stellung fixierbar ist.

4. Kraftfahrzeug nach Anspruch 1, 2 oder 3,
dadurch gekennzeichnet, daß im Innern der Fahrgastkabine (13) ein Anlagerahmen (27) für die Heckklappenscheibe (21) angeordnet ist.

5. Kraftfahrzeug nach Anspruch 4,
dadurch gekennzeichnet, daß der Anlagerahmen (27) einen umlaufenden Dichtflansch zur dichtenden Anlage der Heckklappenscheibe (21) aufweist.

6. Kraftfahrzeug nach Anspruch 4 oder 5,
dadurch gekennzeichnet, daß die Heckklappenscheibe (21) an ihren Kanten eine umlaufende Dichtlippe (28) aufweist (Fig. 7).

7. Kraftfahrzeug nach Anspruch 6,
dadurch gekennzeichnet, daß die umlaufende Dichtlippe (28) doppelseitig ausgebildet ist, derart, daß sie eine dichtende Anlage einerseits an dem Rahmen (27) im Innern der Fahrgastkabine (13), andererseits an dem Heckklappenrahmen (20) ermöglicht (Fig. 7).

8. Kraftfahrzeug nach einem oder mehreren der vorstehenden Ansprüche,
dadurch gekennzeichnet, daß der sich im Bereich der Heckklappe (17) hinter der ins Innere der Fahrgastkabine (13) verschwenkten Heckklappenscheibe (21) ergebende freie Raum als - nach hinten/oben offener - Laderaum (Ladepritsche 19) dient.

9. Kraftfahrzeug nach Anspruch 8,
dadurch gekennzeichnet, daß der in Schließposition befindliche Heckklappenrahmen (20) zur Befestigung von Haltevorrichtungen, vorzugsweise elastischer Haltebänder (32), für geladene (sperrige) Güter (31) dient (Fig. 2 und 10).

10. Kraftfahrzeug nach Anspruch 8,
dadurch gekennzeichnet, daß der sich im Bereich der Heckklappe (17) hinter der ins Innere der Fahrgastkabine (13) verschwenkten Heckklappenscheibe (21) ergebende freie Raum eine Auflagefläche (19) für einen aufzusattelnden Container (35) oder Anhänger (38) bildet (Fig. 3 und 4).

11. Kraftfahrzeug nach Anspruch 8, 9 oder 10,
dadurch gekennzeichnet, daß an der Unterkante des Heckklappenrahmens (20) eine winkelförmige, vorzugsweise im Querschnitt rechtwinklige, Haltevorrichtung (33) um eine Horizontalachse (34) schwenkbar angeordnet ist (Fig. 1 bis 5, 10, 11 und 12).

12. Kraftfahrzeug nach einem oder mehreren der vorstehenden Ansprüche,
dadurch gekennzeichnet, daß der Heckklappenrahmen (20) schalenartig ausgeformt ist, derart, daß er bei ins Fahrzeuginnere verschwenkter Heckklappenscheibe (21) als Halterahmen für geladene (sperrige) Güter dient (Fig. 9).

13. Kraftfahrzeug nach einem oder mehreren der vorstehenden Ansprüche, mit abnehmbarem (auswechselbarem) Antrieb (sogenannter Antriebsmodul),
dadurch gekennzeichnet, daß an die Fahrgastkabine (13) - bei nach oben verschwenkter Heckklappe (17) oder Heckklappenrahmen (20) und vorher entferntem Antrieb (Antriebsmodul 16) - ein den verfügbaren Fahrzeugraum vergrößerndes Heckteil, vorzugsweise Heckmodul (42, 42a, 42b) mit integriertem Antrieb (43, 43a), ankoppelbar ist, derart, daß die Heckklappe (17) bzw. der Heckklappenrahmen (20) die Dachfläche oder einen Teil derselben des eine entsprechende Dachaussparung (44) aufweisenden Heckteils (42, 42a, 42b) bildet (Fig. 14 bis 16).

14. Kraftfahrzeug nach Anspruch 13,
dadurch gekennzeichnet, daß der Heckklappenrahmen (20) als Verbindungselement zur Ankoppelung des Heckteils (42, 42a, 42b) dient.

15. Kraftfahrzeug nach Anspruch 13 oder 14,
dadurch gekennzeichnet, daß die in das Innere der Fahrgastkabine (13) verschwenkte Heckklappenscheibe (21) zur räumlichen Trennung der Fahrersitzreihe (15) von dem Rückraum des durch das angekoppelte Heckteil (42, 42a, 42b) ergänzten Gesamtfahrzeugs dient.

## Claims

1. Motor vehicle, in particular passenger car, with stepless sloping rear, with a passenger compartment comprising a rear door which is pivotable at its upper end about a horizontal axis and which consists of rear door frame and rear door window, wherein the rear door window can be pivoted about a horizontal axis located at its upper edge independently of the respective pivot position of the rear door or rear door frame, characterised in that the rear door window (21) can be pivoted into the passenger compartment (13), out of its closed position - preferably with the rear door frame (20) also in the closed position - into a position closing off the passenger compartment at the rear.

2. Motor vehicle according to claim 1, characterised in that the pivot axis (22) of the rear door window (21) in a manner known in the art coincides with the pivot axis (18) of the rear door frame (20), and is arranged at least in the vicinity of the pivot axis (22) of the rear door frame (20), beneath it.

3. Motor vehicle according to claim 1 or 2, characterised in that the rear door window (21) can be pivoted into the interior of the passenger compartment (13) into a vertical or essentially vertical position and fixed in this position.

4. Motor vehicle according to claim 1, 2 or 3, characterised in that inside the passenger compartment (13) is arranged an abutment frame (27) for the rear door window (21).

5. Motor vehicle according to claim 4, characterised in that the abutment frame (27) comprises a peripheral sealing flange for sealing abutment of the rear door window (21).

6. Motor vehicle according to claim 4 or 5, characterised in that the rear door window (21) at its edges comprises a peripheral sealing lip (28) (Fig. 7).

7. Motor vehicle according to claim 6, characterised in that the peripheral sealing lip (28) is double-sided such that it allows sealing abutment on the one hand against the frame (27) inside the passenger compartment (13) and on the other hand against the rear door frame (20) (Fig. 7).

8. Motor vehicle according to one or more of the preceding claims, characterised in that the free space arising in the region of the rear door (17) behind the rear door window (21) which is pivoted into the interior of the passenger compartment (13), serves as a loading space (loading platform 19) opening to the rear/top.

9. Motor vehicle according to claim 8, characterised in that the rear door frame (20) which is in the closed position serves to fix retaining devices, preferably elastic retaining straps (32), for loaded (bulky) goods (31) (Figs. 2 and 10).

10. Motor vehicle according to claim 8, characterised in that the free space arising in the region of the rear door (17) behind the rear door window (21) which is pivoted into the interior of the passenger compartment (13), forms a supporting surface (19) for a container (35) or trailer (38) to be mounted (Figs. 3 and 4).

11. Motor vehicle according to claim 8, 9 or 10, characterised in that an angled retaining device (33) preferably of right-angled cross-section is arranged at the lower edge of the rear door frame (20) so as to be pivotable about a horizontal axis (34) (Figs. 1 to 5, 10, 11 and 12).

12. Motor vehicle according to one or more of the preceding claims, characterised in that the rear door frame (20) is shaped like a dish in such a way that it serves as a retaining frame for loaded (bulky) goods when the rear door window (21) is pivoted into the interior of the vehicle (Fig. 9).

13. Motor vehicle according to one or more of the preceding claims, with removable (exchangeable) drive (so-called drive module), characterised in that a rear portion which increases the available vehicle space, preferably a rear module (42, 42a, 42b) with integrated drive (43, 43a), can be coupled to the passenger compartment (13) when the rear door (17) or rear door frame (20) is pivoted upwards and the drive (drive module 16) is removed beforehand, in such a way that the rear door (17) or the rear door frame (20) forms the roof surface or a portion thereof of the rear portion (42, 42a, 42b) which comprises a corresponding roof recess (44) (Figs. 14 to 16).

14. Motor vehicle according to claim 13, characterised in that the rear door frame (20) serves as a connecting element for coupling the rear portion (42, 42a, 42b).

15. Motor vehicle according to claim 13 or 14, characterised in that the rear door window (21) pivoted into the interior of the passenger compartment (13) serves for spatial separation of the driver's seat row (15) from the rear space of the whole vehicle supplemented by the coupled rear portion (42, 42a, 42b).

## Revendications

1. Véhicule automobile, notamment voiture particulière, à arrière à pan coupé, sans décroché, comportant un habitacle pourvu d'un hayon arrière qui est monté pivotant autour d'un axe horizontal au niveau de son extrémité supérieure et est formé d'un cadre de hayon et d'une glace de hayon, la glace de hayon pouvant pivoter autour d'un axe horizontal au niveau de son bord supérieur, indépendamment de la position angulaire du hayon arrière ou du cadre de hayon, caractérisé par le fait que la glace (21) de hayon peut être amenée par pivotement depuis sa position de fermeture - le cadre de hayon (20) étant de préférence lui aussi en position fermée - à l'intérieur de l'habitacle (13), dans une position fermant ledit habitacle vers l'arrière.

2. Véhicule automobile selon la revendication 1, caractérisé par le fait que l'axe de pivotement (22) de la glace (21) de hayon, de manière connue en soi, coïncide avec l'axe de pivotement (18) du cadre de hayon (20) et, au moins de la région de l'axe de pivotement (18) du cadre de hayon (20), est disposé en-dessous dudit axe.

3. Véhicule automobile selon la revendication 1 ou 2, caractérisé par le fait que la glace (21) de hayon peut être amenée par pivotement dans une position verticale ou essentiellement verticale à l'intérieur de l'habitacle (13) et immobilisée dans cette position.

4. Véhicule automobile selon la revendication 1, 2 ou 3, caractérisé par le fait qu'un cadre d'appui (27) pour la glace (21) de hayon est disposé à l'intérieur de l'habitacle (13).

5. Véhicule automobile selon la revendication 4, caractérisé par le fait que le cadre d'appui (27) comporte un rebord périphérique d'étanchéité pour l'appui étanche de la glace (21) de hayon arrière.

6. Véhicule automobile selon la revendication 4 ou 5, caractérisé par le fait que la glace (21) de hayon est pourvue, sur ses bords, d'une lèvre d'étanchéité (28) périphérique (figure 7).

7. Véhicule automobile selon la revendication 6, caractérisé par le fait que la lèvre d'étanchéité (28) périphérique est double de telle sorte que celle-ci permet un appui étanche d'une part sur le cadre (27) à l'intérieur de l'habitacle (13) et d'autre part sur le cadre (20) de hayon arrière (figure 7).

8. Véhicule automobile selon une ou plusieurs des revendications précédentes, caractérisé par le fait que l'espace libre formé dans la région du hayon arrière (17), derrière la vitre (21) de hayon amenée par pivotement à l'intérieur de l'habitacle (13), sert d'espace de chargement ouvert vers l'arrière/le haut (plateforme de chargement 19).

9. Véhicule automobile selon la revendication 8, caractérisé par le fait que le cadre (20) de hayon arrière qui se trouve en position fermée sert à la fixation de dispositifs d'arrimage, de préférence de sangles d'arrimage (32) pour les marchandises (31) (encombrantes) chargées (figures 2 et 10).

10. Véhicule automobile selon la revendication 8, caractérisé par le fait que l'espace libre formé dans la région du hayon arrière (17), derrière la vitre (21) de hayon amenée par pivotement à l'intérieur de l'habitacle (13), forme une surface d'appui (19) pour un conteneur (35) ou une remorque (38) attelé (figures 3 et 4).

11. Véhicule automobile selon la revendication 8, 9 ou 10, caractérisé par le fait qu'un dispositif de fixation (33) en forme d'équerre, de préférence à section rectangulaire, est monté pivotant autour d'un axe (34) horizontal sur le bord inférieur du cadre (20) de hayon arrière (figures 1 à 5, 10, 11 et 12).

12. Véhicule automobile selon une ou plusieurs des revendications précédentes, caractérisé par le fait que le cadre (20) de hayon arrière est conformé en coque de telle sorte que, lorsque la glace (21) de hayon est amenée par pivotement à l'intérieur du véhicule, celui-ci serve de cadre de fixation pour les charges (encombrantes) chargées (figure 9).

13. Véhicule automobile selon une ou plusieurs des revendications précédentes pourvu d'un système de propulsion (module de propulsion) démontable (échangeable), caractérisé par le fait qu'une partie d'arrière, de préférence un module d'arrière (42, 42a, 42b) à propulsion (43, 43a) intégrée, qui augmente le volume disponible de l'habitacle peut être accouplée à l'habitacle (13) - lorsque le hayon arrière (17) ou le cadre de hayon (20) est en position relevée et que la propulsion (module de propulsion) a été retirée.

14. Véhicule automobile selon la revendication 13, caractérisé par le fait que le cadre de hayon (20) sert d'élément de liaison pour l'accouplement de la partie d'arrière (42, 42,a, 42b).

15. Véhicule automobile selon la revendication 13 ou 14, caractérisé par le fait-que la glace (21) de hayon amenée par pivotement à l'intérieur de l'habitacle (13) sert à séparer dans l'espace la rangée de sièges avant (15) du volume arrière du véhicule complété par la partie d'arrière (42, 42a, 42b) accouplée.
